# FASCICULE DE BREVET EUROPEEN

(11) **EP 2 506 524 B1**
(45) Date de publication et mention de la délivrance du brevet: **04.07.2018**
(21) Numéro de dépôt: 12156302.7
(22) Date de dépôt: 21.02.2012
(51) Int. Cl.: H04L 29/06

(54) **Procédés et dispositifs de notification d'état de services de communication**
Verfahren und Vorrichtungen zur Anzeige des Status von Kommunikationsdiensten
Methods and devices for notifying the status of communication services

(30) Priorité: 24.02.2011 FR 1151494
(43) Date de publication de la demande: 03.10.2012
(73) Titulaire: Orange, 75015 Paris (FR)
(72) Inventeur: Bouvet, Bertrand, 22700 Perros-Guirec (FR)

(56) Documents cités:
- WO-A1-2009/029014
- US-A1- 2010 124 199

## Description

### Domaine de l'invention

L'invention se situe dans le domaine des réseaux de télécommunication. Elle concerne un dispositif et un procédé de notification d'état de services de communication à des terminaux reliés par un réseau de communication IP (pour Internet Protocol en anglais) et partageant une même identité publique.

### Art antérieur

Les fournisseurs de services de télécommunication proposent à leurs clients des services téléphoniques qui peuvent s'appliquer aux communications sortantes, émises par le terminal d'un utilisateur et appelés services Originating, ou aux communications entrantes, reçues par le terminal d'un utilisateur et appelés services Terminating.

De tels services peuvent par exemple être, pour les services Originating:
- le secret d'appel: Ce service permet d'effectuer une communication en mode anonyme, le numéro de téléphone de l'appelant n'est alors pas affiché à l'appelé lorsqu'il reçoit la communication.
- Outgoing Call Barring-User Control (contrôle utilisateur d'interdiction d'appel sortant en français): Ce service permet à l'utilisateur d'interdire d'émettre des appels vers certains préfixes.

Pour les services Terminating, de tels services peuvent par exemple être:
- l'affichage du numéro de l'appelant,
- le renvoi d'appel vers une messagerie vocale ou un numéro tiers, en cas de non-réponse à un appel entrant sur le terminal, en cas d'occupation du terminal par un autre appel, ou en cas d'indisponibilité du terminal,
- le stop secret: ce service permet à un appelé recevant une communication en mode anonyme de rediriger la communication vers un serveur vocal où l'appelant doit s'identifier.

Selon le réseau de télécommunication utilisé, ces services sont gérés par des serveurs d'application dans le cas de réseau IMS (pour IP Multimedia Subsystem en anglais), par des commutateurs CAA (Commutateur à Autonomie d'Acheminement) et des plateformes de services de type réseau intelligent dans le cas d'un réseau téléphonique commuté (RTC) ou par des commutateurs mobiles MSC (pour Mobile Services Switching Centre en anglais) et des plateformes de services du type réseau intelligent dans le cas de réseau mobile de type GSM (pour Global System for Mobile communications en anglais) par exemple.

Ces services sont configurables par l'utilisateur lui-même à l'aide de différents moyens. L'utilisateur peut par exemple utiliser une interface d'autogestion (aussi appelée selfcare web) accessible depuis n'importe quel terminal fixe ou mobile connecté au réseau IP. L'utilisateur peut ainsi obtenir une information sur l'état de ses services et les modifier.

L'utilisateur peut aussi utiliser une interface d'autogestion vocale (aussi appelée selfcare vocal) accessible à l'aide d'un code de service composé sur un terminal; l'utilisateur a alors accès à un service vocal grâce auquel il peut changer la configuration de ses services à travers des séquences DTMF (pour Dual-Tone Multi-Frequency en anglais) ou en mode de reconnaissance vocale.

L'utilisateur peut aussi composer directement sur le clavier de son terminal des séquences de codes prédéterminées (appelée FCA pour Feature Code Activation en anglais) permettant l'activation ou la désactivation d'un service. Le document WO 2009/029014 décrit un procède de notification a tous les terminaux partageant une même identité publique, du dépôt d'un message.

### Inconvénient de l'art antérieur

Lorsque l'installation téléphonique est partagée entre plusieurs utilisateurs et que plusieurs terminaux sont associés à l'installation téléphonique, c'est-à-dire partageant la même identité publique IMPU (pour IP Multimedia Public Identity en anglais), si un utilisateur modifie l'état d'un des services téléphoniques, les autres utilisateurs de l'installation téléphonique ne sont pas informés de cette modification. Ils peuvent ensuite émettre ou recevoir des communications ayant des comportements inattendus.

Par exemple, un premier utilisateur active le service de Secret d'appel permanent. Si le premier utilisateur oublie ensuite de désactiver ce service, lorsqu'un second utilisateur souhaite émettre une communication, il n'est pas informé de l'activation du service Secret d'appel. Or, l'interlocuteur que le second utilisateur appelle peut ne pas répondre à la communication si le numéro de téléphone de l'appelant n'apparaît pas ou demander à l'appelant de s'identifier par le service Stop Secret.

De plus pour connaître l'état des services téléphoniques disponibles pour l'installation téléphonique associée à son terminal, un utilisateur doit explicitement utiliser un des trois moyens de consultation de l'état des services à sa disposition et décrit ci-dessus.

Un autre service est par exemple la possibilité pour une installation téléphonique d'avoir plusieurs communications en cours, cependant ce nombre est fixe et limité. Lorsqu'un des terminaux de l'installation téléphonique est utilisé en mode nomadisme par exemple, il n'est pas possible pour un utilisateur d'un autre terminal de l'installation téléphonique de connaître le nombre de communication en cours associée à l'installation téléphonique.

### Exposé de l'invention

Un des buts de l'invention est d'apporter des améliorations par rapport à l'état de la technique.
Elle propose à cet effet un procédé de notification d'état d'au moins un service de communication associé à une identité publique, l'identité publique étant partagée par un groupe de terminaux reliés à un réseau de télécommunication. Le procédé met en oeuvre un mécanisme de souscription-notification dédié à une modification de l'état du au moins un service de communication, la modification ayant été demandée par un utilisateur d'un terminal du groupe de terminaux.

Ainsi, les terminaux du groupe de terminaux ayant souscrit au service de notification d'état d'un service de communication reçoivent un message de notification de l'état du service de communication lorsqu'un utilisateur d'un des terminaux du groupe effectue une modification du service. Cette modification du service peut être effectuée par l'utilisation d'une interface d'autogestion web ou vocale ou par l'utilisation de codes FCA, depuis un terminal du groupe de terminaux ou d'un autre terminal, par exemple un ordinateur.
Le service de communication peut correspondre à un service téléphonique par exemple tel que décrit plus haut, ou bien tout autre service téléphonique ou encore tout autre service de communication fourni pour une communication multimédia telle que par exemple une communication vidéo, texte, fax, etc.
L'état d'un service peut correspondre à l'état d'activation du service: par exemple si le service de communication est activé ou désactivé. L'état d'un service peut aussi correspondre au positionnement d'une valeur d'un paramètre du service. Par exemple dans le cas du service de renvoi d'appel, l'état du service peut correspondre au numéro vers lequel les communications sont transférées.
Grâce au procédé de notification, les utilisateurs du groupe de terminaux sont ainsi informés d'une modification de l'état d'un service.

Les différents modes ou caractéristiques de réalisation mentionnés ci-après peuvent être ajoutés indépendamment ou en combinaison les uns avec les autres, aux caractéristiques du procédé de notification d'état défini ci-dessus.
Selon un mode particulier de réalisation de l'invention, le au moins un service de communication appartient à un groupe de services de communication, le mécanisme de souscription-notification s'applique au groupe de services de communication et le groupe de services de communication correspond à une catégorie de services de communication mis en oeuvre à la réception d'une communication par un terminal et/ou à une catégorie de services de communication mis en oeuvre à l'émission d'une communication par un terminal.
Ainsi, un seul message de notification d'état est envoyé pour tous les services d'un groupe de services de communication, ce qui permet d'optimiser les ressources du réseau de communication. Par exemple, un premier service de notification d'état peut ainsi être défini pour la catégorie de services de communications mis en oeuvre à la réception d'une communication par un terminal. Un second service de notification d'état peut être défini pour la catégorie de services de communications mis en oeuvre à l'émission d'une communication par un terminal. Et un troisième service de notification d'état peut être défini pour les deux catégories précédemment définies.

L'invention concerne également un procédé de réception de notification d'état d'au moins un service de communication associé à une identité publique, l'identité publique étant partagée par un groupe de terminaux reliés à un réseau de télécommunication. Le procédé comprend une étape de souscription à un service de notification d'état du au moins un service de communication auprès d'un serveur hébergeant le au moins un service de communication et au moins une étape de réception d'un message de notification d'état du au moins un service de communication, suite à une modification de l'état du au moins un service de communication demandée par un utilisateur d'un terminal du groupe de terminaux.
Ainsi, après souscription au service de notification d'état d'un service de communication, un utilisateur est informé du changement d'état du service par la réception d'une notification sur son terminal.
Les différents modes ou caractéristiques de réalisation mentionnés ci-après peuvent être ajoutés indépendamment ou en combinaison les uns avec les autres, aux caractéristiques du procédé de réception de notification d'état défini ci-dessus.

Selon un mode particulier de réalisation de l'invention, l'étape de souscription est effectuée juste avant l'émission ou la réception d'une communication et le procédé comprend en outre une étape de dé-souscription au service de notification d'état immédiatement après l'étape de réception du message de notification d'état.
Ainsi, le mécanisme de souscription-notification du serveur hébergeant le service de communication n'est mis en oeuvre que pour une courte durée. Les ressources de ce serveur et les ressources du réseau sont alors optimisées car les notifications ne sont envoyées qu'à la demande du terminal.

Selon un autre mode particulier de réalisation de l'invention, ledit au moins un service de communication appartient à un groupe de services de communication et le groupe de services de communication correspond à une catégorie de services de communication mis en oeuvre à la réception d'une communication par un terminal et/ou à une catégorie de services de communication mis en oeuvre à l'émission d'une communication par un terminal.
Ainsi, un terminal peut souscrire au service de notification d'état pour un groupe de services. Ceci permet de limiter le nombre de souscriptions à faire par le terminal.
De plus, les services de communications peuvent être regroupés par catégorie de services. Ainsi, en fonction de ses capacités, un terminal peut ne souscrire au service de notification d'état que pour la ou les catégories de services de communication qu'il est capable de gérer.
De la même manière, l'utilisateur peut choisir selon ses préférences la ou les catégories de services desquels il souhaite connaître l'état.

Selon un autre mode particulier de réalisation de l'invention, le message de notification d'état indique le nombre de communications en cours et associées à l'identité publique partagée.
Ainsi, un utilisateur est informé du nombre de communications en cours pour l'identité publique partagée. Il peut alors par exemple décider d'émettre une nouvelle communication si le nombre de communications simultanées autorisées pour l'identité publique partagée n'est pas atteint.

Selon un autre mode particulier de réalisation de l'invention, le groupe de services de communication est hébergé sur au moins deux serveurs, le procédé de réception de notification d'état comprend au moins une deuxième étape de souscription au service de notification d'état auprès d'au moins un deuxième serveur hébergeant au moins un service de communication du groupe de services de communication.
En effet, les services de communication peuvent être hébergés sur des serveurs d'application distincts. Par exemple, les services d'une même catégorie ou d'un groupe peuvent être hébergés sur plusieurs serveurs. Le terminal doit alors souscrire au service de notification d'état de service auprès de chacun des serveurs hébergeant la catégorie ou le groupe de services.

Selon un autre mode particulier de réalisation de l'invention, le procédé de réception de notification d'état comprend en outre une étape de modification de l'affichage de l'état des services de communication du groupe de services de communication et/ou du nombre de communications en cours associées à l'identité publique partagée, sur le terminal recevant la notification.
Un utilisateur d'un terminal du groupe de terminaux est ainsi informé en temps réel et de manière automatique de l'état des services de communication de l'identité publique partagée à laquelle son terminal est associé.
L'affichage de l'état des services de communication peut être permanent sur l'écran du terminal ou bien temporaire, l'état des services étant affiché seulement lors de la réception d'une communication.
Cet affichage peut être mis en oeuvre sous la forme de textes ou de pictogrammes sur l'écran du terminal.

Selon un autre mode particulier de réalisation de l'invention, le procédé de réception de notification d'état comprend en outre une étape de notification de l'état des services de communication du groupe de services de communication sous la forme d'un message vocal ou d'une tonalité prédéterminée décrivant l'état des services de communication.
Ainsi, si le terminal recevant la notification d'état n'a pas les capacités pour afficher l'état des services, cet état peut être décrit à l'utilisateur via un message vocal diffusé automatiquement lorsqu'il décroche son terminal, ou lorsqu'il consulte sa messagerie vocale.
Selon un mode particulier de réalisation de l'invention, une tonalité prédéterminée peut être associée au changement d'état d'un service. Cette tonalité prédéterminée peut alors être jouée par le terminal lorsqu'un utilisateur décroche le terminal. L'utilisateur est ainsi informé du changement d'état du service avant d'émettre une communication.

L'invention concerne aussi un message de notification d'état d'au moins un service de communication associé à une identité publique, l'identité publique étant partagée par un groupe de terminaux reliés à un réseau de télécommunication, le message étant envoyé par un mécanisme de souscription-notification dédié à une modification de l'état du au moins un service de communication demandée par un utilisateur d'un terminal du groupe de terminaux, le message est caractérisé en ce qu'il contient au moins un champ de données correspondant audit au moins un service de communication, le champ de données étant affecté de la valeur de l'état dudit au moins un service de communication.
Le terminal recevant ce message peut ainsi informer l'utilisateur du terminal de l'état du service, par exemple en affichant cette information sur son écran.

Selon un mode particulier de réalisation de l'invention, lorsque le au moins un service de communication appartient à un groupe de services de communication, et que le groupe de services de communication correspond à une catégorie de services de communication mis en oeuvre à la réception d'une communication par un terminal et/ou à une catégorie de services de communication mis en oeuvre à l'émission d'une communication par un terminal, le message de notification d'état contient un champ de données indiquant l'état du service pour chaque service du groupe de services.
Selon un autre mode particulier de réalisation de l'invention, lorsque le groupe de services est hébergé sur plusieurs serveurs, le message de notification d'état contient un champ de données indiquant l'état du service pour chaque service du groupe de services et hébergé sur le serveur ayant émis le message de notification.

L'invention concerne également un serveur de notification d'état d'au moins un service de communication associé à une identité publique, l'identité publique étant partagée par un groupe de terminaux reliés à un réseau de télécommunication. Le serveur comporte des moyens de réception de souscription à un service de notification d'état, des moyens de notification d'état du au moins un service de communication à au moins un terminal appartenant au groupe de terminaux, lesdits moyens de notification étant mis en oeuvre suite à une modification de l'état du au moins un service de communication demandée par un utilisateur d'un terminal du groupe de terminaux, et/ou des moyens de notification d'état du nombre de communications en cours associées à l'identité publique.
Les avantages des caractéristiques du serveur de notification d'état sont identiques à ceux présentés pour le procédé correspondant de notification d'état.

L'invention concerne aussi un terminal de réception de notification d'état d'au moins un service de communication associé à une identité publique, l'identité publique étant partagée par un groupe de terminaux reliés à un réseau de télécommunication. Le terminal comporte des moyens de souscription à un service de notification d'état du au moins un service de communication auprès d'au moins un serveur de notification d'état et des moyens de réception de notification d'état du au moins un service de communication, lesdits moyens de réception étant mis en oeuvre suite à une modification de l'état du au moins un service de communication demandée par un utilisateur d'un terminal du groupe de terminaux.
Selon un mode particulier de réalisation de l'invention, le terminal comprend également des moyens d'affichage de l'état des services de communication du groupe de services de communication, et/ou des moyens de réception de notification de l'état des services de communication sous la forme d'un message vocal ou d'une tonalité prédéterminée.

Les avantages des caractéristiques du terminal de réception de notification d'état sont identiques à ceux présentés pour le procédé correspondant de réception de notification d'état.

L'invention concerne aussi un produit programme d'ordinateur comportant des instructions pour l'exécution du procédé de notification d'état d'au moins un service de communication tel que décrit ci-dessus selon l'un quelconque des modes particuliers de réalisation de l'invention, lorsque le programme est exécuté par un processeur.
L'invention concerne également un support d'information lisible par un ordinateur, et comportant des instructions d'un programme d'ordinateur comportant des instructions pour l'exécution du procédé de notification d'état tel que mentionné ci-dessus.

L'invention concerne également un produit programme d'ordinateur comportant des instructions pour l'exécution du procédé de réception de notification d'état tel que décrit ci-dessus selon l'un quelconque des modes particuliers de réalisation de l'invention, lorsque le programme est exécuté par un processeur.
L'invention concerne aussi un support d'information lisible par un ordinateur, et comportant des instructions d'un programme d'ordinateur comportant des instructions pour l'exécution du procédé de réception de notification d'état tel que mentionné ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 présente un système comportant une installation téléphonique reliée à un réseau de télécommunications, dans lequel l'invention peut être mise en oeuvre;
- la figure 2 illustre des étapes du procédé de notification d'état d'un service selon un mode particulier de réalisation de l'invention,
- la figure 3 illustre des étapes du procédé de réception de notification d'état d'un service selon un mode particulier de réalisation de l'invention,
- la figure 4 illustre des étapes du procédé de réception de notification d'état d'un service selon un autre mode particulier de réalisation de l'invention,
- la figure 5 illustre des messages échangés lors du procédé de réception de notification d'état d'un service selon un mode particulier de réalisation de l'invention,
- la figure 6 illustre un exemple de message de notification d'état de services selon un mode particulier de réalisation de l'invention,
- la figure 7 illustre la structure d'un serveur de notification d'état d'un service selon un mode particulier de réalisation de l'invention,
- la figure 8 illustre la structure d'un terminal de réception de notification d'état d'un service selon un mode particulier de réalisation de l'invention.

### Description d'un mode particulier de réalisation de l'invention

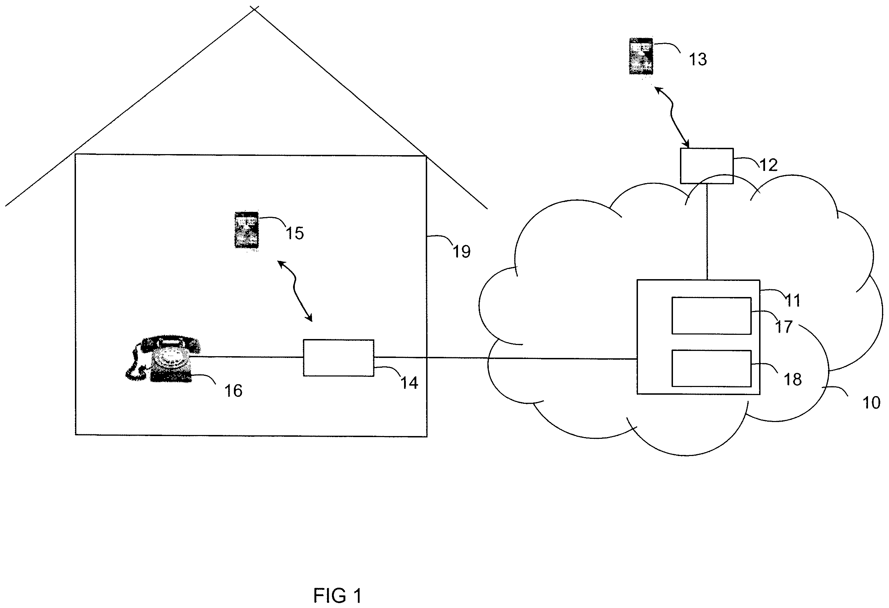

La figure 1 présente un système comportant une installation téléphonique reliée à un réseau de télécommunications, dans lequel l'invention peut être mise en oeuvre.
La figure 1 comporte une installation téléphonique 19, par exemple une installation téléphonique privée, comportant un téléphone analogique 16 relié à une passerelle résidentielle 14 connectée au réseau de télécommunications 10. Le réseau de télécommunications 10 peut par exemple être un réseau IP comportant un coeur de réseau IMS 11. L'installation téléphonique 19 comporte également des terminaux de type softphone (ou téléphone logiciel) 15 et 13. Un terminal de type softphone peut par exemple être un ordinateur de type PC (pour Personal Computer en anglais), un PDA (pour Personal Digital Assistant en anglais), ou un téléphone mobile intelligent, appelé Smartphone en anglais, ou bien une IPTV (télévision connectée au réseau IP), ou encore une tablette. Ces terminaux nécessitent l'installation d'un logiciel de téléphonie VoIP (pour Voice over IP en anglais) pour pouvoir assurer la fonctionnalité de téléphonie.
Les terminaux 13 et 15 peuvent se connecter au réseau 10 par l'intermédiaire d'une connexion sans fil WIFI ou d'une connexion filaire et de la passerelle résidentielle 14 ou bien en situation de nomadisme par l'intermédiaire d'une connexion sans fil WIFI et d'un point d'accès 12.
Les terminaux 13, 15 et 16 sont associés du point de vue du réseau 11 à la même identité publique IMPU.
Le coeur de réseau IMS 11 comporte deux serveurs d'application 17 et 18. Ces serveurs d'applications permettent par exemple d'héberger les services de communication Originating (serveur 17) et Terminating (serveur 18) utilisées par les terminaux 13, 15 et 16 de l'installation téléphonique 19.
Selon d'autres modes de réalisation, les services de communication peuvent être regroupés selon d'autres critères: par exemple par thème d'utilisation, par exemple le thème de l'anonymat d'un appel, ou en fonction des ressources nécessaires à leur utilisation par un terminal, ou encore de leur portabilité sur différents réseau de communication. Cette liste de critères n'est pas exhaustive et tout autre critère de regroupement de services peut être utilisé.
Les serveurs d'application 17 et 18 mettent en oeuvre le procédé de notification d'état de services tel que décrit par la suite.
Selon un autre mode de réalisation, ces serveurs peuvent être intégrés dans un unique serveur d'application.
Selon un autre mode de réalisation, plus de deux serveurs peuvent être utilisés pour héberger les services de communication.
Les terminaux 13, 15 et 16 mettent en oeuvre le procédé de réception de notification d'état de services tel que décrit par la suite.

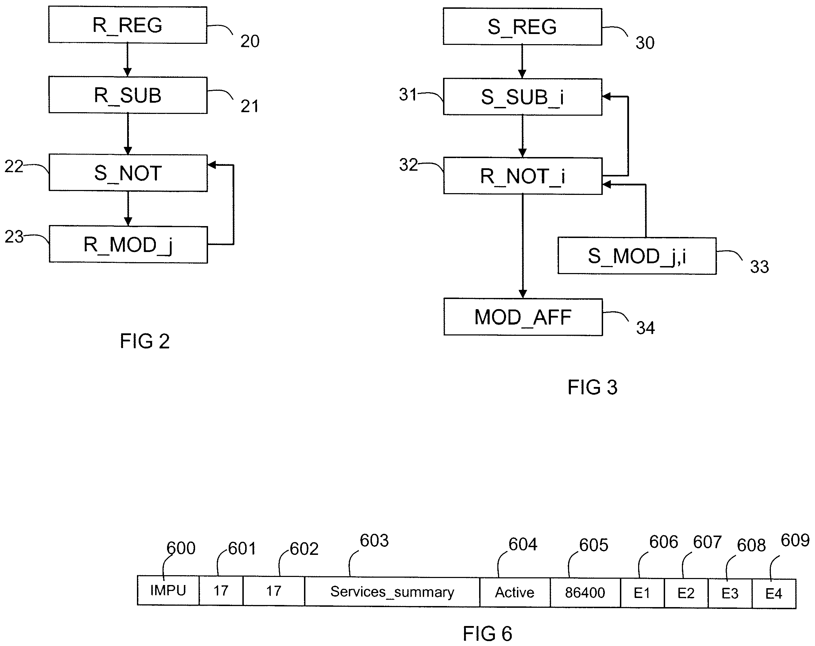

La figure 2 illustre des étapes du procédé de notification d'état d'un service selon un mode particulier de réalisation de l'invention. Le procédé comporte une première étape 20 de réception d'un message d'enregistrement (R_REG) d'un terminal, par exemple le terminal 13 de la figure 1, auprès du coeur de réseau IMS 11. Le terminal 13 peut ainsi ensuite émettre et recevoir des communications par l'intermédiaire du réseau IP 10.
Le procédé comporte ensuite une étape 21 de réception d'un message de souscription (R_SUB) au service de notification d'état des services de communication, venant du terminal 13. Le serveur d'application, par exemple le serveur 17 de la figure 1, recevant ce message de souscription est alors informé que le terminal 13 souhaite recevoir les notifications relatives à l'état des services de communication hébergés par le serveur d'application et auxquels l'installation téléphonique 19 de la figure 1 est abonnée.
Suite à la réception du message de souscription 21, un message de notification est envoyé (S_NOT) au terminal 13 lors d'une étape 22. Ce message de notification indique l'état des services de communication auxquels l'installation téléphonique 19 est abonnée.
Lors d'une étape 23, le serveur d'application 17 reçoit une demande de modification d'un service (R_MOD_j). Par exemple, cette demande de modification peut consister en l'activation du service Secret d'appel permanent. Le procédé de notification d'état est ici décrit pour le serveur d'application 17 mettant en oeuvre des services de communication de type Originating. La mise en en oeuvre du procédé serait la même pour le serveur d'application 18 mettant en oeuvre des services de communication de type Terminating. Dans ce cas, la demande de modification de l'état d'un service peut par exemple consister à positionner un renvoi d'appel permanent vers un numéro de téléphone tiers.
A la réception de la demande de modification d'un service, le serveur d'application 17 effectue la modification et renvoie ensuite lors d'une étape 22 un message de notification au terminal 13 indiquant l'état des services de communication et notamment le nouvel état du service modifié.
Le serveur d'application 17 peut à tout moment recevoir un message de souscription d'un autre terminal de l'installation téléphonique 19. Lors de la réception de la demande de modification d'un service à l'étape 23, le serveur 17 envoie alors à l'étape 22, un message de notification de l'état des services de communication à tous les terminaux de l'installation téléphonique 19 ayant souscrit au service de notification d'état.

La figure 3 illustre des étapes du procédé de réception de notification d'état d'un service selon un mode particulier de réalisation de l'invention. Ce procédé est mis en oeuvre par exemple par le terminal 13 de la figure 1.
Dans une première étape 30, le terminal 13 envoie un message d'enregistrement (S_REG) au coeur de réseau IMS 11. Puis, le terminal 13 envoie un message de souscription (S_SUB_i) au service de notification d'état des services au serveur d'application 17 lors d'une étape 31. Il reçoit ensuite un message de notification (R_NOT_i) de l'état des services, par exemple les services de type Originating, hébergés par le serveur d'application 17 et auxquels l'installation téléphonique 19 est abonnée.
Selon le mode de réalisation de l'invention, le terminal 13 peut également envoyer un message de souscription au serveur d'application 18 lors d'une étape 31 supplémentaire afin d'être informé de l'état des services, par exemple les services de type Terminating, hébergés par ce serveur d'application. Le terminal 13 reçoit en retour un message de notification de l'état des services hébergés par le serveur d'application 18 lors d'une étape 32.
Selon le mode de réalisation de l'invention, les services de communication auxquels l'installation téléphonique 19 est abonnée peuvent être hébergés sur plus de deux serveurs. Le terminal 13 envoie un message de souscription à l'étape 31 à tous les serveurs hébergeant des services de communication dont il souhaite être informé de l'état. Il reçoit en retour autant de message de notification d'état à l'étape 32.
Selon un autre mode de réalisation, les services de communication de type Originating et Terminating peuvent être hébergés sur un unique serveur. Le terminal 13 envoie alors un seul message de souscription au serveur hébergeant ces services à l'étape 31 et ne reçoit qu'un message de notification de l'état des services à l'étape 32. Dans ce mode de réalisation, le terminal 13 peut aussi n'envoyer un message de souscription que pour les services de type Originating ou Terminating. Ainsi, si par exemple le terminal 13 ne supporte pas les fonctionnalités associées aux services de type Terminating ou Originating, il ne reçoit un message de notification d'état que pour les services dont il supporte les fonctionnalités.
Lors d'une étape 34, le terminal modifie l'affichage (MOD_AFF) de l'état des services de communication en fonction du contenu du message de notification d'état reçu lors de l'étape 32.
Suite à une demande de modification d'un service de communication (S_MOD_j,i) par un utilisateur de l'installation téléphonique 19 à l'étape 33, le terminal 13 reçoit un message de notification d'état à l'étape 32. Ce message de notification indique l'état du groupe de services de communication hébergés par le serveur d'application, auquel appartient le service dont l'état a été modifié et auquel le terminal a souscrit.
Suite à la réception de ce message de notification d'état, le terminal 13 modifie lors de l'étape 34 l'affichage de l'état des services.
Cet affichage peut être sous la forme de textes ou de pictogrammes affichés sur l'écran du terminal. L'utilisateur du terminal est ainsi informé de manière automatique de l'état des services de communication.
Selon un autre mode de réalisation de l'invention, le serveur d'application envoyant le message de notification d'état d'un service modifié peut envoyer à la place d'un message de notification ou en parallèle un message vocal décrivant l'état du service de communication. Lorsque l'utilisateur décroche le terminal afin d'émettre une communication, il est informé grâce au message vocal du changement de l'état du service de communication. Le message vocal peut être joué automatiquement lorsque l'utilisateur décroche le terminal ou à la demande de l'utilisateur lorsque celui-ci interroge la messagerie vocale associée au terminal ou associée à l'installation téléphonique.
Selon un autre mode de réalisation de l'invention, l'étape 34 peut correspondre à la réception de flux audio et/ou vidéo et/ou texte en mode Early Media lorsqu'un utilisateur décroche le terminal pour émettre une communication. Un flux audio et/ou vidéo et/ou texte en mode Early Media est un flux reçu pendant l'établissement de l'appel et donc non facturé à l'utilisateur. Ce flux peut contenir une information de l'état des services de communication.

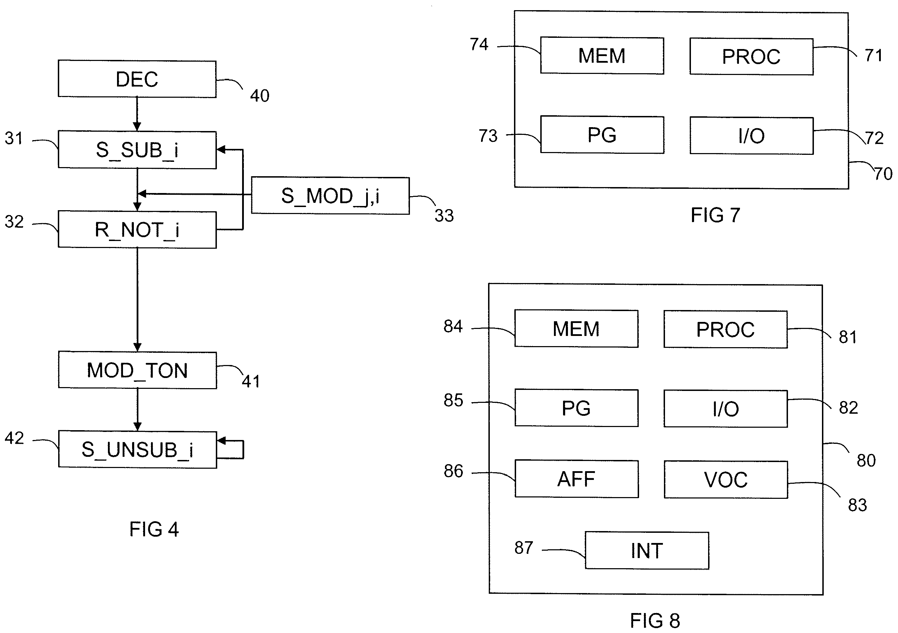

La figure 4 illustre des étapes du procédé de réception de notification d'état d'un service selon un autre mode particulier de réalisation de l'invention.
Dans ce mode de réalisation, les étapes de souscription 31 et de notification 32 décrites à la figure 3 ne sont mises en oeuvre que juste avant la réception ou l'émission d'une communication suite à l'étape 40 de la figure 4.
Dans le cas de l'émission d'une communication par un utilisateur, l'étape 40 correspond par exemple à une étape de décroché de terminal par l'utilisateur. Cette étape de décroché peut par exemple correspondre à l'action de l'utilisateur lorsqu'il décroche le combiné du terminal ou lorsqu'il compose les chiffres du numéro sur son terminal.
Dans le cas de la réception d'une communication par un terminal, l'étape 40 correspond par exemple au message SIP "180 Ringing" envoyé par le terminal recevant la communication en réponse au message SIP INVITE lui indiquant la réception de la communication.
Après l'étape 40, le terminal envoie en 31 un message de souscription à tous les serveurs d'application hébergeant des services de communication dont il souhaite être informé de l'état.
Par exemple, dans le cas de l'émission d'une communication, le terminal envoie un message de souscription pour les services de type Originating, ou dans le cas de la réception d'une communication, le terminal envoie un message de souscription pour les services de type Terminating.
Le terminal reçoit en retour un ou des messages de notification à l'étape 32. Ainsi, si l'état d'un service de communication a été modifié par un utilisateur lors d'une étape 33, le terminal en sera informé grâce au message de notification reçu en 32.
Le terminal informe ensuite l'utilisateur de l'état des services lors d'une étape (MOD_TON) 41. Cette étape 41 peut par exemple être effectuée selon une des techniques présentées pour l'étape 34 lors de la description de la figure 3.
Selon un autre mode de réalisation de l'invention, à l'étape 41, le terminal peut jouer une tonalité d'invitation à numéroter prédéterminée en fonction de l'état du service modifié. L'utilisateur est ainsi informé juste avant d'émettre une communication de la modification de l'état d'un service. Ce mode de réalisation peut par exemple être utile pour les terminaux ne pouvant afficher l'état des services sur un écran.
Dans le cas de la réception d'une communication, le terminal peut jouer une sonnerie prédéterminée en fonction de l'état du service modifié. L'utilisateur est ainsi informé à la réception d'une communication de la modification de l'état d'un service.
Le terminal envoie ensuite à l'étape 42 un message de dé-souscription (S_UNSUB_i) à tous les serveurs d'application auprès desquels il avait souscrit au service de notification d'état. Ceci permet d'optimiser les ressources des serveurs d'application.

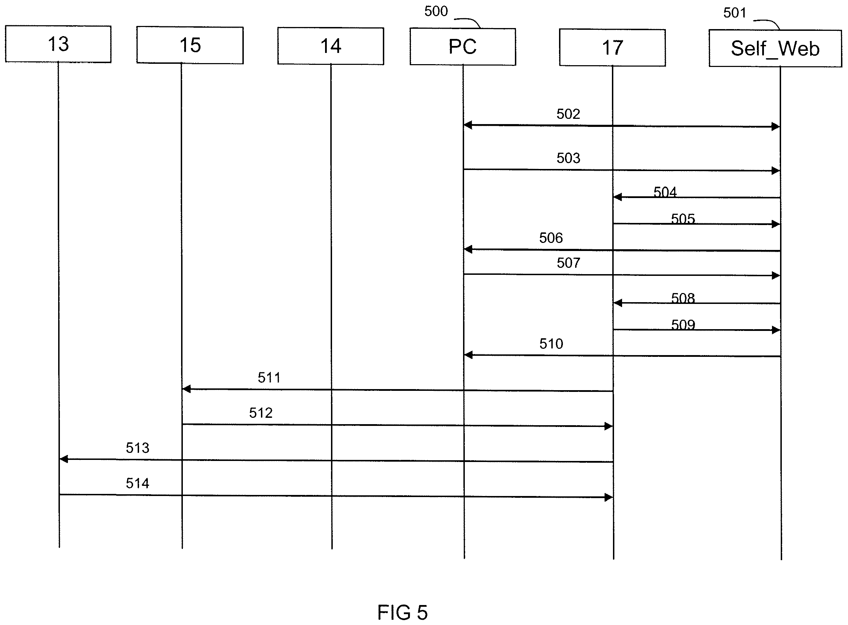

La figure 5 illustre des messages échangés lors du procédé de réception de notification d'état d'un service selon un mode particulier de réalisation de l'invention.

Les terminaux 13, 15 et 16 appartiennent à la même installation téléphonique et partagent la même identité publique. Le terminal 16 est un terminal analogique connecté à la passerelle résidentielle 14. La passerelle résidentielle 14 intègre une pile VoIP (pour Voice over IP en anglais) utilisant le protocole SIP, cette pile lui permet de gérer les communications entrantes et sortantes pour le terminal analogique 16 et d'autres terminaux analogiques ou DECT (pour Digital Enhanced Cordless Telephone en anglais) pouvant être connectés à la passerelle.
Le serveur d'application 17 héberge par exemple un groupe de services de communication de type Originating et Terminating.
Les terminaux souhaitant recevoir des messages de notification de l'état des services hébergés par le serveur d'application 17 mettent en oeuvre un mécanisme normalisé de souscription-notification, aussi appelé Subscribe-Notify selon la norme IETF RFC3265 (IETF pour Internet Engineering Task Force en anglais et RFC pour Request For Comments en anglais). Le mécanisme Subscribe-Notify s'applique à un "Event Package" (paquet d'événement en anglais). Un Event Package correspond à un service déclaré auprès de l'IANA (pour Internet Assigned Numbers Authority en anglais) et dont le contenu est normalisé par un organisme de normalisation qui en propose l'utilisation, par exemple l'IETF ou le 3GPP (pour 3rd Generation Partnership Project en anglais).
Selon un mode particulier de réalisation de l'invention, il est possible par exemple de définir:
- un Event Package appelé Services_Originating auquel est associée la notification de l'état des services de communication de type Originating,
- un Event Package appelé Services_Terminating auquel est associée la notification de l'état des services de communication de type Terminating, et
- un Event Package appelé Services_Summary auquel est associée la notification de l'état des services de communication de type Originating et Terminating.
La souscription à la notification d'état de services se fait par l'envoi par un terminal d'un message SIP SUBSCRIBE dont la valeur du champ Event indique le nom de l'Event Package auquel le terminal souhaite souscrire. Ce message SUBSCRIBE est envoyé au serveur hébergeant les services regroupés dans l'Event Package cible.
Ainsi, par exemple les terminaux 13 et 15 ont lors d'une étape préalable souscrit au service de notification de l'état des services auprès du serveur 17 en envoyant un message SIP SUBSCRIBE (non illustré sur la figure 5) indiquant dans le champ Event la valeur "Services_Summary". Cette valeur indique que lorsque le serveur d'application enverra un message de notification, le message de notification contiendra l'état des services de type Originating et des services de type Terminating.
Le terminal 16 ne peut par exemple pas afficher l'état de tous les services de communication. La passerelle résidentielle 14 va alors souscrire pour le terminal 16 lors d'une étape préalable à la réception de la notification de l'état des services de type Originating. Pour cela, la passerelle résidentielle 14 envoie un message SIP SUBSCRIBE avec un champ Event indiquant "Services_Originating" (message non illustré sur la figure 5).

La valeur du champ Event permet au serveur d'application d'identifier à quels événements, ou à quel groupe de services, le terminal envoyant le message de souscription souhaite s'abonner. Ainsi, des terminaux d'une même installation téléphonique peuvent souscrire à différentes notifications de l'état des services en fonction des capacités des terminaux et/ou des préférences des utilisateurs de ces terminaux.
Sur la figure 5, un utilisateur demande la modification de l'état d'un service de communication à partir par exemple d'un ordinateur (PC) 500 et d'une connexion avec une interface d'autogestion web (SELF_WEB) 501.
L'utilisateur s'identifie auprès de l'interface 501 par un mécanisme d'authentification connu en 502, par exemple en envoyant un identifiant et un mot de passe.
L'ordinateur 500 envoie ensuite en 503 une requête HTTP (pour HyperText Transfer Protocol en anglais) GET demandant l'état des services auxquels l'installation téléphonique 19 est abonnée. Un échange de messages (504,505) entre l'interface 501 et le serveur d'application 17 du réseau IMS permet à l'interface de connaître l'état des services demandé.
L'interface 501 envoie alors en 506 un message HTTP 200 OK à l'ordinateur 500, contenant la liste de l'état des services.
Suite à la modification par l'utilisateur de l'état d'un service, l'ordinateur envoie en 507 à l'interface 501 un message HTTP PUSH indiquant la modification de l'état du service. L'interface 501 informe le serveur d'application de la modification de l'état du service par des échanges de messages (508, 509) avec le serveur d'application.
L'interface 501 envoie ensuite en 510 à l'ordinateur 500 un message HTTP 200 OK indiquant le nouvel état des services suite à la prise en compte de la modification.
La modification peut être faite par tout utilisateur de l'installation téléphonique disposant des données de connexion à l'interface.
Selon le mode de réalisation, la modification peut également être demandée depuis le terminal 13, 15 ou 16 de l'installation téléphonique, via l'interface web, une interface vocale ou encore l'utilisation de codes FCA.
Par exemple, le service modifié correspond à un service de type Terminating. Suite à la réception de la demande de modification en 508, le serveur d'application 17 envoie un message SIP NOTIFY de notification d'état des services aux terminaux 13 et 15 en 513 et 511 respectivement. Le message SIP NOTIFY indique dans son champ Event la valeur "Services_Summary" et indique pour chaque service de type Originating ou Terminating l'état du service.
La passerelle 14 n'ayant pas souscrit pour le terminal 16 à la notification de l'Event Package "Services_Summary", elle ne reçoit aucun message de notification du serveur d'application.
En réponse au message de notification, les terminaux 13 et 15 envoient au serveur d'application 17 un message SIP 200 OK en 514 et 512 respectivement.
Selon un autre mode particulier de réalisation, le service modifié correspond à un service de type Originating. Suite à la réception de la demande de modification en 508, le serveur d'application 17 envoie un message SIP NOTIFY de notification d'état des services aux terminaux 13 et 15 en 513 et 511 respectivement.

Le message SIP NOTIFY indique dans son champ Event la valeur "Services_Summary" et indique pour chaque service de type Originating ou Terminating l'état du service.
Le serveur d'application 17 envoie aussi un message de notification SIP NOTIFY à la passerelle 14 pour informer le terminal 16 de l'état des services de communication (message non illustré sur la figure 5).
Le message SIP NOTIFY indique dans son champ Event la valeur "Services_Originating" et indique pour chaque service de type Originating l'état du service.

La figure 6 illustre un exemple de message de notification d'état de services selon un mode particulier de réalisation de l'invention. Par exemple, ce message peut correspondre à un message SIP NOTIFY. Il comprend par exemple:
- un champ "To" dont la valeur 600 correspond à l'identité publique de l'installation téléphonique (IMPU),
- un champ "From" dont la valeur 601 correspond à l'identité de l'expéditeur du message ici le serveur d'application 17,
- un champ "Contact" dont la valeur 602 correspond à l'adresse de joignabilité de l'expéditeur du message ici le serveur d'application 17,
- un champ "Event" dont la valeur 603 correspond au nom de l'Event Package dont le message porte l'information, par exemple Services_Summary,
- un champ "Subscription_State" dont la valeur 604 indique la souscription à l'Event Package est toujours valide, la valeur est par exemple positionnée à "Active",
- un champ "Expires" dont la valeur 605 correspond au délai d'expiration de la souscription à l'Event Package, la valeur est par exemple positionnée à 86400 secondes,
le message comprend ensuite une succession de champs pour chaque service de communication associé à l'Event Package "Services_Summary", par exemple les valeurs 606 à 609 associées à chaque champ indiquent l'état (E1 à E4) du service correspondant.

La figure 7 illustre la structure d'un serveur 70 de notification d'état d'un service selon un mode particulier de réalisation de l'invention.
Le serveur 70 selon l'invention comprend une mémoire 74 comprenant une mémoire tampon (MEM), une unité de traitement 71, équipée par exemple d'un microprocesseur (PROC), et pilotée par le programme d'ordinateur (PG) 73, mettant en oeuvre le procédé notification d'état d'un service tel que décrit dans l'invention.
A l'initialisation, les instructions de code du programme d'ordinateur 73 sont par exemple chargées dans une mémoire RAM avant d'être exécutées par le processeur de l'unité de traitement 71. Le microprocesseur de l'unité de traitement 71 met en oeuvre les étapes du procédé de notification d'état d'un service selon l'invention décrit précédemment et notamment les étapes de réception de message de souscription et d'envoi de messages de notification d'état d'un service, ainsi que la réception d'une demande de modification de l'état d'un service, selon les instructions du programme d'ordinateur 73.

Pour cela, le dispositif comprend, outre la mémoire tampon 74, des moyens de communication avec le réseau de télécommunications (I/O) 72.

La figure 8 illustre la structure d'un terminal 80 de réception de notification d'état d'un service selon un mode particulier de réalisation de l'invention.
Le terminal 80 selon l'invention comprend une mémoire 84 comprenant une mémoire tampon (MEM), une unité de traitement 81, équipée par exemple d'un microprocesseur (PROC), et pilotée par le programme d'ordinateur (PG) 85, mettant en oeuvre le procédé réception de notification d'état d'un service tel que décrit dans l'invention.
A l'initialisation, les instructions de code du programme d'ordinateur 85 sont par exemple chargées dans une mémoire RAM avant d'être exécutées par le processeur de l'unité de traitement 81. Le microprocesseur de l'unité de traitement 81 met en oeuvre les étapes du procédé de réception de notification d'état d'un service selon l'invention décrit précédemment et notamment les étapes d'envoi d'un message de souscription et de réception d'un message de notification d'état d'un service, selon les instructions du programme d'ordinateur 85.
Pour cela, le dispositif comprend, outre la mémoire tampon 84, des moyens de communication avec le réseau de télécommunications (I/O) 82.
Selon un mode de réalisation particulier de l'invention, le terminal 80 peut également comporter des moyens 87 de modification de l'état d'un service, par exemple des moyens de saisie d'information sur le terminal (INT) tels que par exemple un clavier numérique ou alphanumérique. Selon un mode de réalisation particulier de l'invention, le terminal 80 peut également comporter des moyens d'affichage (AFF) 86 de l'état d'un service.
Selon un mode de réalisation particulier de l'invention, le terminal 80 peut également comporter des moyens de signalisation sonore (VOC) 83 de l'état d'un service.

## Revendications

1. Procédé de notification, par un serveur, de l'état d'au moins un service de communication associé à une identité publique, l'identité publique étant partagée par un groupe de terminaux reliés à un réseau de télécommunication, le procédé est **caractérisé en ce qu'**il met en oeuvre un mécanisme de souscription (21) -notification (22) dédié à une modification (23) de l'état du au moins un service de communication demandée par un utilisateur d'un terminal du groupe de terminaux, et **en ce qu'**il comporte :
- une étape de réception d'une souscription (21) à un service de notification d'état du au moins un service de communication, en provenance d'au moins un terminal dudit groupe de terminaux partageant l'identité publique, et
- une étape d'envoi, audit au moins un terminal en provenance duquel la souscription a été reçue et appartenant audit groupe de terminaux partageant l'identité publique, d'un message de notification (22) d'état du au moins un service de communication, suite à une modification (23) de l'état du au moins un service de communication demandée par un utilisateur d'un terminal du groupe de terminaux.

2. Procédé de notification d'état selon la revendication 1 **caractérisé en ce que** le au moins un service de communication appartient à un groupe de services de communication, **en ce que** le mécanisme de souscription-notification s'applique au groupe de services de communication et **en ce que** le groupe de services de communication correspond à une catégorie de services de communication mis en oeuvre à la réception d'une communication par un terminal et/ou à une catégorie de services de communication mis en oeuvre à l'émission d'une communication par un terminal.

3. Procédé de réception de notification, par un terminal, de l'état d'au moins un service de communication associé à une identité publique, l'identité publique étant partagée par un groupe de terminaux reliés à un réseau de télécommunication, le procédé est **caractérisé en ce qu'**il met en oeuvre un mécanisme de souscription (21) - notification (22), et comprend:
- Une étape de souscription (31) à un service de notification d'état du au moins un service de communication auprès d'un serveur hébergeant le au moins un service de communication, en provenance d'au moins un terminal dudit groupe de terminaux partageant l'identite publique, et - Au moins une étape de réception (32), dudit au moins un terminal en provenance duquel la souscription a été reçue au serveur et appartenant dudit groupe de terminaux partageant l'identité publique, d'un message de notification d'état du au moins un service de communication, suite à une modification (33) de l'état du au moins un service de communication demandée par un utilisateur d'un terminal du groupe de terminaux.

4. Procédé de réception de notification d'état selon la revendication 3 **caractérisé en ce que** l'étape de souscription est effectuée juste avant l'émission ou la réception (40) d'une communication et **en ce que** le procédé comprend une étape de dé-souscription (42) au service de notification d'état immédiatement après l'étape de réception (32) du message de notification d'état.

5. Procédé de réception de notification d'état selon l'une quelconque des revendications 3 ou 4 **caractérisé en ce que** ledit au moins un service de communication appartient à un groupe de services de communication et **en ce que** le groupe de services de communication correspond à une catégorie de services de communication mis en oeuvre à la réception d'une communication par un terminal et/ou à une catégorie de services de communication mis en oeuvre à l'émission d'une communication par un terminal.

6. Procédé de réception de notification d'état selon l'une quelconque des revendications 3 à 5 **caractérisé en ce que** le message de notification d'état indique le nombre de communications en cours et associées à l'identité publique partagée.

7. Procédé de réception de notification d'état selon l'une quelconque des revendications 5 ou 6, le groupe de services de communication étant hébergés sur au moins deux serveurs, le procédé est **caractérisé en ce qu'**il comprend au moins une deuxième étape de souscription au service de notification d'état auprès d'au moins un deuxième serveur hébergeant au moins un service de communication du groupe de services de communication.

8. Procédé de réception de notification d'état selon l'une quelconque des revendications 3 à 7 **caractérisé en ce qu'**il comprend en outre une étape de modification de l'affichage de l'état des services de communication du groupe de services de communication et/ou du nombre de communications en cours associées à l'identité publique partagée, sur le terminal recevant la notification.

9. Procédé de réception de notification d'état selon l'une quelconque des revendications 3 à 7 **caractérisé en ce qu'**il comprend en outre une étape de notification de l'état des services de communication du groupe de services de communication sous la forme d'un message vocal ou d'une tonalité prédéterminée décrivant l'état des services de communication.

10. Serveur de notification d'état d'au moins un service de communication associé à une identité publique, l'identité publique étant partagée par un groupe de terminaux reliés à un réseau de télécommunication, le serveur est **caractérisé en ce qu'**il comporte:
- des moyens de réception de souscription à un service de notification d'état, en provenance d'au moins un terminal dudit groupe de terminaux partageant l'identité publique,
- des moyens de notification d'état du au moins un service de communication à au moins un terminal en provenance duquel la souscription a été reçue par les moyens de souscription et appartenant au groupe de terminaux, lesdits moyens étant mis en oeuvre suite à une modification de l'état du au moins un service de communication demandée par un utilisateur d'un terminal du groupe de terminaux.

11. Terminal de réception de notification d'état d'au moins un service de communication associé à une identité publique, l'identité publique étant partagée par un groupe de terminaux reliés à un réseau de télécommunication, ledit terminal appartenant audit groupe de terminaux et étant **caractérisé en ce qu'**il comporte:
- Des moyens de souscription à un service de notification d'état dudit service de communication auprès d'au moins un serveur de notification d'état,
- Des moyens de réception de notification d'état dudit un service de communication, lesdits moyens étant mis en oeuvre suite à une modification de l'état dudit service de communication demandée par un utilisateur d'un terminal appartenant au groupe de terminaux.

12. Terminal de réception de notification d'état selon la revendication 11 **caractérisé en ce qu'**il comprend:
- Des moyens d'affichage de l'état des services de communication du groupe de services de communication, et/ou
- Des moyens de réception de notification de l'état des services de communication sous la forme d'un message vocal ou d'une tonalité prédéterminée.

13. Produit programme d'ordinateur comportant des instructions pour l'exécution du procédé de notification d'état d'au moins un service de communication selon l'une quelconque des revendications 1 ou 2 et/ou des instructions pour l'exécution du procédé de réception de notification d'état selon l'une quelconque des revendications 3 à 9, lorsque le programme est exécuté par un processeur.

## Patentansprüche

1. Verfahren zur Benachrichtigung über den Status mindestens eines Kommunikationsdienstes, der einer öffentlichen Identität zugeordnet ist, durch einen Server, wobei die öffentliche Identität von einer Gruppe von mit einem Telekommunikationsnetz verbundenen Endgeräten geteilt wird, wobei das Verfahren **dadurch gekennzeichnet ist, dass** es einen Mechanismus der Anmeldung(21)und der Benachrichtigung (22) umsetzt, der einer Änderung (23) des Status des mindestens einen Kommunikationsdienstes dient, die von einem Benutzer eines Endgeräts der Endgerätegruppe angefordert wurde, und dass es umfasst:
- einen Schritt des Empfangens einer Anmeldung (21) zu einem Statusbenachrichtigungsdienst des mindestens einen Kommunikationsdienstes von mindestens einem Endgerät in der Gruppe von Endgeräten, die die öffentliche Identität teilen, und
- einen Schritt des Sendens einer Statusbenachrichtigungsmeldung (22) des mindestens einen Kommunikationsdienstes an das mindestens eine Endgerät, von dem die Anmeldung empfangen wurde und das zu der Gruppe von Endgeräten gehört, die die öffentliche Identität teilen, nach einer Änderung (23) des Status des mindestens einen Kommunikationsdienstes, die von einem Benutzer eines Endgeräts der Endgerätegruppe angefordert wurde.

2. Verfahren zur Statusbenachrichtigung gemäß Anspruch 1, **dadurch gekennzeichnet, dass** der mindestens eine Kommunikationsdienst zu einer Gruppe von Kommunikationsdiensten gehört, dass der Anmeldungs- und Benachrichtigungsmechanismus für die Gruppe von Kommunikationsdiensten gilt und dass die Gruppe von Kommunikationsdiensten einer Kategorie von Kommunikationsdiensten, die beim Empfang einer Kommunikation durch ein Endgerät umgesetzt wird, und/oder einer Kategorie von Kommunikationsdiensten, die bei der Übertragung einer Kommunikation durch ein Endgerät umgesetzt wird, entspricht.

3. Verfahren zum Empfangen einer Benachrichtigung über den Status mindestens eines Kommunikationsdienstes, der einer öffentlichen Identität zugeordnet ist, durch einen Server, wobei die öffentliche Identität von einer Gruppe von mit einem Telekommunikationsnetz verbundenen Endgeräten geteilt wird, wobei das Verfahren **dadurch gekennzeichnet ist, dass** es einen Mechanismus der Anmeldung(21)und der Benachrichtigung (22) umsetzt, und dass es umfasst:
- einen Schritt der Anmeldung (31) zu einem Statusbenachrichtigungsdienst des mindestens einen Kommunikationsdienstes bei einem Server, der den mindestens einen Kommunikationsdienst bereitstellt, von mindestens einem Endgerät in der Gruppe von Endgeräten, die die öffentliche Identität teilen, und
- mindestens einen Schritt des Empfangens (32) einer Statusbenachrichtigungsmeldung des mindestens einen Kommunikationsdienstes von dem mindestens einen Endgerät, von dem die Anmeldung bei dem Server empfangen wurde und das zu der Gruppe von Endgeräten gehört, die die öffentliche Identität teilen, nach einer Änderung (33) des Status des mindestens einen Kommunikationsdienstes, die von einem Benutzer eines Endgeräts in der Gruppe von Endgeräten angefordert wurde.

4. Verfahren zum Empfangen einer Statusbenachrichtigung gemäß Anspruch 3, **dadurch gekennzeichnet, dass** der Schritt der Anmeldung kurz vor dem Senden oder Empfangen (40) einer Kommunikation ausgeführt wird, und dass das Verfahren einen Schritt der Abmeldung (42) von dem Statusbenachrichtigungsdienst unmittelbar nach dem Schritt des Empfangens (32) der Statusbenachrichtigungsmeldung umfasst.

5. Verfahren zum Empfangen einer Statusbenachrichtigung gemäß einem der Ansprüche 3 oder 4, **dadurch gekennzeichnet, dass** der mindestens eine Kommunikationsdienst zu einer Gruppe von Kommunikationsdiensten gehört und dass die Gruppe von Kommunikationsdiensten einer Kategorie von Kommunikationsdiensten, die beim Empfang einer Kommunikation durch ein Endgerät umgesetzt wird, und/oder einer Kategorie von Kommunikationsdiensten, die bei der Übertragung einer Kommunikation durch ein Endgerät umgesetzt wird, entspricht.

6. Verfahren zum Empfangen einer Statusbenachrichtigung gemäß einem der Ansprüche 3 bis 5, **dadurch gekennzeichnet, dass** die Statusbenachrichtigungsmeldung die Anzahl der laufenden und der geteilten öffentlichen Identität zugeordneten Kommunikationen anzeigt.

7. Verfahren zum Empfangen einer Statusbenachrichtigung gemäß einem der Ansprüche 5 oder 6, wobei die Gruppe von Kommunikationsdiensten auf mindestens zwei Servern bereitgestellt wird, wobei das Verfahren **dadurch gekennzeichnet ist, dass** es mindestens einen zweiten Schritt der Anmeldung zu dem Statusbenachrichtigungsdienst bei mindestens einem zweiten Server umfasst, der mindestens einen Kommunikationsdienst der Gruppe von Kommunikationsdiensten bereitstellt.

8. Verfahren zum Empfangen einer Statusbenachrichtigung gemäß einem der Ansprüche 3 bis 7, **dadurch gekennzeichnet, dass** es ferner einen Schritt des Änderns der Statusanzeige der Kommunikationsdienste der Gruppe von Kommunikationsdiensten und/oder der Anzahl der laufenden Kommunikationen, die der geteilten öffentlichen Identität zugeordnet sind, auf dem Endgerät umfasst, das die Benachrichtigung empfängt.

9. Verfahren zum Empfangen einer Statusbenachrichtigung gemäß einem der Ansprüche 3 bis 7, **dadurch gekennzeichnet, dass** es ferner einen Schritt des Benachrichtigens über den Status der Kommunikationsdienste der Gruppe von Kommunikationsdiensten in Form einer Sprachnachricht oder eines vorbestimmten Tons, der den Status der Kommunikationsdienste beschreibt, umfasst.

10. Server zur Benachrichtigung über den Status mindestens eines Kommunikationsdienstes, der einer öffentlichen Identität zugeordnet ist, wobei die öffentliche Identität von einer Gruppe von mit einem Telekommunikationsnetz verbundenen Endgeräten geteilt wird, wobei der Server **dadurch gekennzeichnet ist, dass** er umfasst:
- Mittel zum Empfangen von Anmeldungen zu einem Statusbenachrichtigungsdienst von mindestens einem Endgerät in der Gruppe von Endgeräten, die die öffentliche Identität teilen,
- Mittel zum Benachrichtigen mindestens eines Endgerätes, von dem die Anmeldung durch die Mittel zur Anmeldung empfangen wurde und das zu der Gruppe von Endgeräten gehört, über den Status des mindestens einen Kommunikationsdienstes, wobei die Mittel nach einer Änderung des Status des mindestens einen Kommunikationsdienstes eingesetzt werden, die von einem Benutzer eines Endgeräts in der Gruppe von Endgeräten angefordert wurde.

11. Endgerät zum Empfangen von Benachrichtigungen über den Status mindestens eines Kommunikationsdienstes, der einer öffentlichen Identität zugeordnet ist, wobei die öffentliche Identität von einer Gruppe von mit einem Telekommunikationsnetz verbundenen Endgeräten geteilt wird, wobei das Endgerät zu der Gruppe von Endgeräten gehört und **dadurch gekennzeichnet ist, dass** es umfasst:
- Mittel zum Anmelden zu einem Statusbenachrichtigungsdienst des Kommunikationsdienstes bei mindestens einem Server zur Benachrichtigung über den Status,
- Mittel zum Empfangen von Statusbenachrichtigungen des Kommunikationsdienstes, wobei die Mittel nach einer Änderung des Status des Kommunikationsdienstes eingesetzt werden, die von einem Benutzer eines zu der Gruppe von Endgeräten gehörenden Endgerätes angefordert wurde.

12. Endgerät zum Empfangen von Benachrichtigungen über den Status gemäß Anspruch 11, **dadurch gekennzeichnet, dass** es umfasst:
- Mittel zur Anzeige des Status der Kommunikationsdienste der Gruppe von Kommunikationsdiensten und/oder
- Mittel zum Empfangen einer Benachrichtigung über den Status der Kommunikationsdienste in Form einer Sprachnachricht oder eines vorbestimmten Tons.

13. Computerprogrammprodukt, umfassend Anweisungen zum Ausführen des Verfahrens zur Benachrichtigung über den Status mindestens eines Kommunikationsdienstes gemäß einem der Ansprüche 1 oder 2 und/oder Anweisungen zum Ausführen des Verfahrens zum Empfangen von Statusbenachrichtigungen gemäß einem der Ansprüche 3 bis 9, wenn das Programm von einem Prozessor ausgeführt wird.

## Claims

1. Method for notifying, by a server, the status of at least one communication service associated with a public identity, the public identity being shared by a group of terminals linked to a telecommunication network, the method is **characterized in that** it implements a subscription (21) - notification (22) mechanism dedicated to a modification (23) of the status of the at least one communication service requested by a user of a terminal of the group of terminals, and **in that** it comprises:
- a step of reception of a subscription (21) to a service for notifying the status of the at least one communication service, from at least one terminal of said group of terminals sharing the public identity, and
- a step of sending, to said at least one terminal from which the subscription has been received and belonging to said group of terminals sharing the public identity, of a message (22) for notifying the status of the at least one communication service, following a modification (23) of the status of the at least one communication service requested by a user of a terminal of the group of terminals.

2. Status notification method according to Claim 1, **characterized in that** the at least one communication service belongs to a group of communication services, **in that** the subscription-notification mechanism is applied to the group of communication services and **in that** the group of communication services corresponds to a category of communication services implemented on the reception of a communication by a terminal and/or to a category of communication services implemented on the transmission of a communication by a terminal.

3. Method for receiving notification, by a terminal, of the status of at least one communication service associated with a public identity, the public identity being shared by a group of terminals linked to a telecommunication network, the method is **characterized in that** it implements a subscription (21) - notification (22) mechanism, and comprises:
- a step of subscription (31) to a service for notifying the status of the at least one communication service with a server hosting the at least one communication service, from at least one terminal of said group of terminals sharing the public identity, and
- at least one step of reception (32), from said at least one terminal from which the subscription has been received on the server and belonging to said group of terminals sharing the public identity, of a message for notifying the status of the at least one communication service, following a modification (33) of the status of the at least one communication service requested by a user of a terminal of the group of terminals.

4. Status notification reception method according to Claim 3, **characterized in that** the subscription step is performed just before the transmission or the reception (40) of a communication and **in that** the method comprises a step of unsubscription (42) from the status notification service immediately after the step of reception (32) of the status notification message.

5. Status notification reception method according to either one of Claims 3 or 4, **characterized in that** said at least one communication service belongs to a group of communication services and **in that** the group of communication services corresponds to a category of communication services implemented on the reception of a communication by a terminal and/or to a category of communication services implemented on the transmission of a communication by a terminal.

6. Status notification reception method according to any one of Claims 3 to 5, **characterized in that** the status notification message indicates the number of communications in progress and associated with the shared public identity.

7. Status notification reception method according to either one of Claims 5 or 6, the group of communication services being hosted on at least two servers, the method is **characterized in that** it comprises at least one second step of subscription to the status notification service with at least one second server hosting at least one communication service of the group of communication services.

8. Status notification reception method according to any one of Claims 3 to 7, **characterized in that** it also comprises a step of modification of the display of the status of the communication services of the group of communication services and/or of the number of communications in progress associated with the shared public identity, on the terminal receiving the notification.

9. Status notification reception method according to any one of Claims 3 to 7, **characterized in that** it also comprises a step of notification of the status of the communication services of the group of communication services in the form of a voice message or of a predetermined tone describing the status of the communication services.

10. Server for notifying the status of at least one communication service associated with a public identity, the public identity being shared by a group of terminals linked to a telecommunication network, the server is **characterized in that** it comprises:
- means for receiving subscription to a status notification service, from at least one terminal of said group of terminals sharing the public identity,
- means for notifying the status of the at least one communication service to at least one terminal from which the subscription has been received by the subscription means and belonging to the group of terminals, said means being implemented following a modification of the status of the at least one communication service requested by a user of a terminal of the group of terminals.

11. Terminal for receiving notification of the status of at least one communication service associated with a public identity, the public identity being shared by a group of terminals linked to a telecommunication network, said terminal belonging to said group of terminals and being **characterized in that** it comprises:
- means for subscribing to a service for notifying the status of said communication service with at least one status notification server,
- means for receiving notification of the status of said communication service, said means being implemented following a modification of the status of said communication service requested by a user of a terminal belonging to the group of terminals.

12. Terminal for receiving status notification according to Claim 11, **characterized in that** it comprises:
- means for displaying the status of the communication services of the group of communication services, and/or
- means for receiving notification of the status of the communication services in the form of a voice message or of a predetermined tone.

13. Computer program product comprising instructions for the execution of the method for notifying the status of at least one communication service according to either one of Claims 1 or 2 and/or instructions for the execution of the status notification reception method according to any one of Claims 3 to 9, when the program is run by a processor.
